# FASCICULE DE BREVET EUROPEEN

(11) **EP 3 172 887 B1**
(45) Date de publication et mention de la délivrance du brevet: **31.08.2022**
(21) Numéro de dépôt: 15759497.9
(22) Date de dépôt: 08.07.2015
(51) Int. Cl.: H04L 69/14, H04L 69/163

(54) **PROCÉDÉ DE COMMUNICATION TCP VIA DES CHEMINS MULTIPLES ENTRE DEUX TERMINAUX**
VERFAHREN ZUR MEHRWEGE-TCP-KOMMUNIKATION ZWISCHEN ZWEI ENDGERÄTEN
METHOD FOR MULTIPATH TCP COMMUNICATION BETWEEN TWO TERMINALS

(30) Priorité: 21.07.2014 FR 1457038
(43) Date de publication de la demande: 31.05.2017
(73) Titulaire: Orange, 92130 Issy-les-Moulineaux (FR)
(72) Inventeur: BOUCADAIR, Mohamed, F-35830 Betton (FR); JACQUENET, Christian, F-35131 Pont-Pean (FR)
(86) Numéro de dépôt international: PCT/FR2015/051889
(87) Numéro de publication internationale: WO 2016/012687

(56) Documents cités:
- US-A1- 2011 296 006
- WING R RAVINDRANATH T REDDY CISCO A FORD UNAFFILIATED R PENNO CISCO D: "Multipath TCP (MPTCP) Path Selection using PCP; draft-wing-mptcp-pcp-00.txt", MULTIPATH TCP (MPTCP) PATH SELECTION USING PCP; DRAFT-WING-MPTCP-PCP-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 7 octobre 2013 (2013-10-07), pages 1-10, XP015095076,
- FORD CISCO C RAICIU U POLITECHNICA OF BUCHAREST M HANDLEY U COLLEGE LONDON O BONAVENTURE U CATHOLIQUE DE LOUVAIN A: "TCP Extensions for Multipath Operation with Multiple Addresses; rfc6824.txt", TCP EXTENSIONS FOR MULTIPATH OPERATION WITH MULTIPLE ADDRESSES; RFC6824.TXT, INTERNET ENGINEERING TASK FORCE, IETF; STANDARD, INTERNET SOCIETY (ISOC) 4, RUE DES FALAISES CH- 1205 GENEVA, SWITZERLAND, 17 janvier 2013 (2013-01-17), pages 1-64, XP015086539, cité dans la demande
- DENG D LIU T SUN CHINA MOBILE M BOUCADAIR FRANCE TELECOM G CAUCHIE BOUYGUES TELECOM L: "Use-cases and Requirements for MPTCP Proxy in ISP Networks; draft-deng-mptcp-proxy-00.txt", USE-CASES AND REQUIREMENTS FOR MPTCP PROXY IN ISP NETWORKS; DRAFT-DENG-MPTCP-PROXY-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 29 mai 2014 (2014-05-29), pages 1-18, XP015099305,
- M Boucadair: "MPTCP Connectivity Checks", , 4 mars 2015 (2015-03-04), XP055180730, Extrait de l'Internet: URL:http://tools.ietf.org/pdf/draft-boucad air-mptcp-connectivity-checks-00.pdf [extrait le 2015-04-01]

## Description

La présente invention concerne le domaine des télécommunications, et notamment les réseaux de communications aptes à mettre en oeuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic de données acheminé dans le réseau.

L'invention s'applique à tout type de dispositif-client tel qu'un terminal fixe ou mobile, ou une passerelle domestique (« *Residential Gateway* » en anglais), ou une passerelle située dans une entreprise, ou une passerelle d'opérateur réseau (« *Gateway »* en anglais), ou encore un décodeur TV (« *Set-Top Box »,* ou STB en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« *Multi-Interface* », ou MIF en anglais). Lorsqu'un terminal dispose de plusieurs interfaces capables de le raccorder à différents réseaux d'accès (par exemple : fixe, mobile, ou WLAN), il bénéficie alors d'un accès dit « hybride », parce qu'il combine différentes technologies de réseaux d'accès.

Plusieurs adresses IP peuvent alors être attribuées à ces terminaux MIF pour qu'ils puissent se connecter à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address,* ou ULA en anglais), ou adresse IPv6 de portée globale (*Global Unicast Address,* ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif MIF peut notamment exploiter la pluralité d'interfaces dont il dispose en cours d'établissement d'une connexion simple (c'est-à-dire, une connexion établie le long d'un chemin unique avec un correspondant donné), voire après l'établissement d'une connexion simple. On notera également qu'un dispositif ne sait pas a priori s'il lui est possible d'utiliser *plusieurs* chemins distincts pour établir une connexion avec un correspondant donné ; plus précisément, le dispositif n'acquiert cette information (le cas échéant) qu'à l'issue d'une phase au cours de laquelle il tente d'établir une connexion utilisant des chemins multiples avec le correspondant.

On rappelle qu'une « connexion à chemins multiples » est une connexion établie entre deux dispositifs empruntant simultanément un ou plusieurs chemins entre ces deux dispositifs. Une telle connexion obéit à un protocole dédié, tel que MPTCP (Multi-Path TCP), qui peut éventuellement être défini comme une extension d'un protocole de transport défini antérieurement, tel que TCP (initiales des mots anglais « *Transmission Control Protocol* » signifiant « Protocole de Contrôle de Transmission »). Autrement dit, une connexion à chemins multiples est un agrégat d'une ou plusieurs connexions simples empruntant un même chemin ou des chemins différents (partiellement ou complètement disjoints).

On rappelle également que le protocole TCP, défini notamment dans la spécification RFC 793 de l'IETF (Internet Engineering Task Force), est l'un des protocoles principaux utilisés par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Il fonctionne au niveau de la couche transport du modèle OSI. Les navigateurs Web utilisent le protocole TCP lorsqu'ils se connectent à des serveurs distants ; le protocole TCP est aussi utilisé pour acheminer du courrier électronique ou pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une connexion TCP est identifiée par l'adresse et le numéro de port du terminal source, ainsi que l'adresse et le numéro de port du terminal de destination.

Deux terminaux peuvent insérer des « options TCP » dans les messages TCP échangés entre eux, afin, par exemple, d'optimiser la qualité de la transmission TCP. De telles options occupent l'espace disponible en fin d'en-tête TCP, et ont une longueur (« *length* » en anglais) exprimée en octets. Le type (« *kind»* en anglais) d'option est un identifiant unique descriptif de la nature de l'option TCP. Par exemple, la valeur « 0 » indique la fin de la liste des options, et la valeur « 2 » indique la taille maximum du segment TCP (« *Maximum Segment Size* », ou MSS en anglais).

L'avènement des terminaux MIF introduit une complexité supplémentaire pour utiliser tout ou partie des adresses IP allouées via les réseaux disponibles. Notamment, étant donné que les connexions TCP sont associées à une adresse IP et un numéro de port, toute modification d'au moins l'une de ces informations est de nature à pénaliser le fonctionnement d'une connexion TCP en cours, et, partant, le service utilisant ladite connexion TCP. Ce changement est particulièrement préjudiciable lorsque le terminal se voit attribuer une nouvelle adresse IP, ou parce que le terminal se connecte à un autre réseau, ou encore lorsque l'interface à laquelle l'adresse IP est associée n'est plus disponible. Par exemple, des moyens pour informer un correspondant TCP distant qu'une adresse IP n'est plus valide sont alors nécessaires pour assurer le maintien d'une connexion existante.

Le groupe de travail *mptcp* de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole MPTCP (cf. A. Ford, C. Raiciu et M. Handley, « TCP Extensions for Multipath Operation with Multiple Addresses », RFC 6824, janvier 2013), que certains téléphones intelligents et certains systèmes d'exploitation sont déjà capables de mettre en oeuvre. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP liés à de telles modifications d'adressage, et plus généralement pour répondre aux exigences posées par un contexte où un terminal a la capacité de se raccorder à un ou plusieurs réseaux via une ou plusieurs interfaces. Le protocole MPTCP répond notamment au besoin d'assurer une continuité de session en cas de mobilité du terminal. Différents cas d'usage peuvent être envisagés pour le protocole MPTCP, tels que :
- transférer du trafic entre plusieurs points d'accès WLAN,
- décharger un réseau mobile, et basculer le trafic vers un point d'accès WLAN,
- agréger plusieurs liens d'accès,
- répartir la charge entre plusieurs chemins, et
- optimiser l'utilisation des ressources réseau.
On rappelle à cet égard (cf. Wikipedia) que « l'agrégation de liens » est, dans le domaine des réseaux, une notion décrivant le regroupement de plusieurs interfaces réseau comme s'il s'agissait d'une seule, dans le but d'accroître le débit au-delà des limites d'un seul lien, et éventuellement de faire en sorte que d'autres interfaces prennent le relais si un lien réseau tombe en panne (principe de redondance).

Un exemple particulièrement avantageux d'application du protocole MPTCP est le transfert de fichiers volumineux utilisant les ressources du protocole FTP (File Transfer Protocol). Un dispositif agissant en tant que client FTP peut dynamiquement exploiter l'ensemble des chemins disponibles qui lui permettent d'accéder à un serveur FTP, pourvu que ce dernier soit apte à mettre en oeuvre les différentes connexions MPTCP établies par le client FTP. Le temps de transfert des données est ainsi significativement réduit par rapport à une connexion TCP.

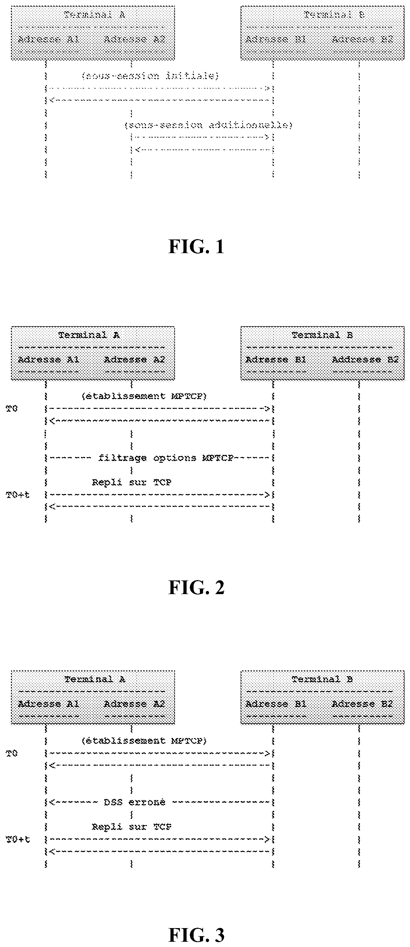

Dans le cadre de MPTCP, on appelle « sous-session » (« *sub-flow* » en anglais) une connexion TCP reposant sur l'utilisation de l'un des couples (adresse IP, numéro de port) disponibles. De ce fait, une connexion MPTCP est un agrégat de sous-sessions TCP. A titre d'exemple, la figure 1 montre une connexion MPTCP entre un terminal A et un terminal B ; la sous-session initiale est établie entre l'adresse A1 du terminal A et l'adresse B1 du terminal B ; ultérieurement, une sous-session additionnelle est établie entre l'adresse A2 du terminal A et l'adresse B1 du terminal B.

Les systèmes d'exploitation présentent aux applications des interfaces dédiées, appelées API *(Application Programming Interface)* pour interagir avec les couches TCP et IP. L'API classique présentée aux applications TCP/IP est l'interface « *socket ».* Une « *socket »* est caractérisée par plusieurs « attributs » tels que « *Local Socket Address », « Remote Socket Address* » et « *Protocol ».* De nouvelles extensions (API MPTCP) ont été spécifiées par l'IETF dans le document RFC 6897 pour permettre aux applications de contrôler les connexions MPTCP. On notera que l'API MPTCP est une extension de l'API TCP.

On appelle « table de connexion MPTCP » une structure logicielle utilisée pour grouper toutes les sous-sessions TCP associées à une même connexion MPTCP. Plusieurs attributs peuvent être utilisés pour caractériser une table de connexion MPTCP. En plus des attributs TCP/IP classiques mentionnés ci-dessus, une valeur est donnée à des attributs spécifiques au protocole MPTCP. La valeur de ces attributs de la table de connexion est contrôlée via l'API MPTCP.

Une connexion MPTCP est initialisée comme n'importe quelle connexion TCP classique, à l'exception du fait que l'option TCP « MP_CAPABLE » (signifiant que le terminal émetteur est compatible avec le protocole MPTCP) est incluse dans le message contenant le drapeau d'initialisation de connexion (SYN) et dans les messages ultérieurs. Un terminal MPTCP peut signaler au terminal distant la disponibilité d'une adresse IP supplémentaire à l'aide de l'option TCP « ADD_ADDR », sans nécessairement créer une sous-session associée.

Toutefois, la signalisation de plusieurs adresses IP disponibles et susceptibles d'être utilisées pour communiquer avec un correspondant peut conduire à l'échec de l'établissement de certaines sous-sessions TCP parce que les adresses IP externes telles que perçues par les terminaux distants peuvent ne pas être les mêmes que celles visibles localement. Pour cette raison, l'option ADD_ADDR du protocole MPTCP comprend un identificateur d'adresse (« Address ID ») utilisé pour identifier sans ambiguïté une adresse IP disponible. Cette disposition est censée, selon l'état de l'art, éviter les problèmes induits par la présence d'un NAT (initiales des mots anglais « *Network Address Translater»* signifiant « Traducteur d'Adresse Réseau ») sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewall* » en anglais). Plus précisément, la spécification du protocole MPTCP stipule que les numéros de séquence tels qu'indiqués dans l'en-tête TCP sont spécifiques à chaque sous-session, tandis que le numéro de séquence indiqué dans l'option TCP « DSS » *(« Data Sequence Signal »)* du protocole MPTCP sert à associer ces sous-sessions à la même connexion MPTCP.

Le protocole MPTCP entend s'affranchir des contraintes imposées par la prolifération massive de « *middle boxes* » (fonctions service insérées dans une chaîne de communication), comme les NAT et les pare-feux, dans les réseaux actuels. En outre, il est prévu dans le document RFC 6824 qu'en cas d'échec d'une tentative d'établissement d'une connexion MPTCP, la connexion se transforme automatiquement en une connexion TCP simple.

Le document de D. Wing et al. édité par l'IETF et intitulé « Multipath TCP (MPTCP) Path Selection using PCP ; draf-wing-mptcp-pcp-00.txt », pages 1-10, 7 octobre 2013, décrit un protocole permettant à une API MPTCP de sélectionner un chemin lorsque des chemins multiples sont disponibles grâce à des extensions PCP (Port Control Protocol).

Le document de A. Ford et al. édité par l'IETF et intitulé « TCP Extensions for Multipath Operation with Multiple Addresses », pages 1-64, janvier 2013, présente un ensemble d'extensions au protocole TCP pour supporter un fonctionnement avec des chemins multiples.

Le document US 2011/296006 décrit un procédé de communication sans fil comprenant une communication avec un serveur via un premier chemin MPTP utilisant une première adresse IP, une communication avec le serveur via un second chemin MPTP utilisant une seconde adresse IP et par l'intermédiaire d'un noeud sans fil et une communication pair-à-pair avec le noeud sans fil.

Malheureusement, en dépit de toutes ces précautions, d'autres problèmes peuvent surgir lors de la tentative d'établissement d'une connexion MPTCP. Par exemple :
- certaines options du protocole MPTCP, voire toutes, peuvent être filtrées (c'est-à-dire, retirées) par des fonctions service, telles qu'un NAT ou un pare-feu, situées en coupure de flux entre deux pairs MPTCP, comme illustré sur la **figure 2****;**
- même si les messages SYN MPTCP (mentionnés ci-dessus) sont échangés avec succès entre deux pairs MPTCP, des fonctions service situées en coupure de flux entre les deux pairs peuvent filtrer les options DSS (mentionnées ci-dessus) des paquets de données ; dans ce cas, comme illustré sur la **figure** 3, la tentative d'établissement d'une connexion MPTCP ne peut pas aboutir, avec comme conséquence le repli sur une connexion TCP simple comme dans le cas illustré en référence à la **figure 2** ;
- il peut se produire qu'une première sous-session TCP soit établie avec succès, mais que l'établissement de sous-sessions ultérieures échoue faute de l'existence d'autres chemins compatibles avec le protocole MPTCP.

Les auteurs de la présente invention ont réalisé que, dans ces conditions, la présence de telles fonctions service avait pour effet de prolonger sensiblement le délai d'établissement de sous-sessions TCP et, par conséquent, avait un impact négatif sur la qualité du service de communication, telle que perçue par l'utilisateur.

La présente invention concerne donc un procédé de communication dans un réseau IP selon la revendication 1 mis en œuvre par un dispositif-client, un dispositif-client selon la revendication 3, un procédé de communication dans un réseau IP selon la revendication 5, mis en œuvre par un dispositif-relais, un dispositif-relais selon la revendication 6, un moyen de stockage de données selon la revendication 8 et un programme d'ordinateur selon la revendication 9.

Grâce à l'invention, un dispositif communicant, qui prend la forme du dispositif-client de la revendication 3 ou du dispositif-relais de la revendication 6, peut :
- découvrir les capacités d'éventuelles fonctions service, telles qu'un NAT ou un pare-feu, situées en coupure de flux sur un chemin permettant d'atteindre ce dispositif communicant, afin notamment d'établir si l'une de ces fonctions service filtre ou modifie des options TCP à chemins multiples (dans le cadre de la présente invention, on appelle « option TCP à chemins multiples » une option TCP définie par le protocole de connexions à chemins multiples utilisé),
- enregistrer, en conséquence, le statut de ce chemin, c'est-à-dire sa compatibilité ou sa non-compatibilité avec les connexions à chemins multiples, et
- avant toute tentative de connexion avec un correspondant donné, anticiper l'échec d'une connexion TCP à chemins multiples avec ce correspondant le long d'un chemin donné reliant le dispositif communicant à ce correspondant.

Le dispositif communicant saura donc à l'avance, lors de l'établissement d'une connexion avec un correspondant, s'il peut établir une connexion à chemins multiples le long de ce chemin, ou s'il devra se contenter d'une connexion TCP simple. Il en résulte une réduction du délai d'établissement de connexion, et donc, évidemment, une qualité d'expérience utilisateur sensiblement améliorée.

Les dispositifs communicants visés par l'invention peuvent être de type quelconque, par exemple un terminal, un routeur ou une passerelle résidentielle.

De plus, un tel dispositif communicant peut :
- ajuster son comportement en fonction de son attachement réseau (par exemple, en cas d'attachement à un nouveau réseau, d'indisponibilité d'une interface réseau, ou de détection d'une fonction service), et
- décider, sans risquer de dégrader la qualité de la communication avec son correspondant, d'activer une connexion à chemins multiples, ou de désactiver une connexion à chemins multiples en cours ou toutes ses connexions à chemins multiples en cours, ou encore d'ajouter une nouvelle sous-session TCP à une connexion à chemins multiples en cours.

Grâce à l'invention telle que revendiquée, le dispositif communicant peut commodément déterminer la compatibilité ou la non-compatibilité dudit chemin avec les connexions TCP à chemins multiples.

L'invention peut être mise en oeuvre par un dispositif-client disposant d'une ou de plusieurs adresses externes, ou d'une ou de plusieurs interfaces réseau (logiques ou physiques). Ce dispositif-client peut aussi ne disposer que d'une seule interface s'il est situé derrière un dispositif-relais (tel qu'un routeur ou une passerelle résidentielle) connecté à un ou plusieurs réseaux et compatible avec les connexions à chemins multiples.

Grâce à l'invention, on évite le délai que pourrait causer une tentative d'établissement d'une connexion à chemins multiples le long d'un chemin incompatible avec une telle connexion.

Si un dispositif-client apte à mettre en oeuvre une connexion TCP à chemins multiples constate qu'au moins l'un des chemins permettant d'atteindre ce dispositif-client est compatible avec les connexions TCP à chemins multiples, le procédé comprend en outre une étape au cours de laquelle ledit dispositif-client utilise des options TCP à chemins multiples pour établir des connexions avec un autre dispositif-client le long dudit chemin compatible avec les connexions TCP à chemins multiples.

En particulier, les deux pairs pourront établir entre eux une connexion à chemins multiples le long d'un chemin précédemment considéré comme incompatible avec une telle connexion, si les circonstances qui ont précédemment causé un repli vers une connexion TCP simple ont changé.

On notera que l'invention peut être mise en oeuvre même lorsqu'un dispositif-client ne connaît qu'un seul chemin pour communiquer avec un correspondant donné ; on rappelle que la disponibilité éventuelle de chemins multiples n'est déterminée que lors de l'établissement d'une connexion avec le correspondant. De préférence, l'invention sera mise en oeuvre pour *chacun* des chemins de communication possibles entre les deux dispositifs-clients, suite à la découverte de ce chemin par l'un ou l'autre de ces dispositifs-clients ; on bénéficiera ainsi au maximum des possibilités offertes par les connexions à chemins multiples.

Par ailleurs, ladite connexion à chemins multiples pourra avantageusement être conforme au protocole MPTCP, de manière à bénéficier des dispositions de ce protocole, telles que mentionnées succinctement ci-dessus.

Corrélativement, l'invention concerne divers dispositifs.

Elle concerne ainsi, premièrement, un dispositif communicant étant soit un dispositif-client selon la revendication 3, soit un dispositif-relais selon la revendication 6.

En outre, ce dispositif-client comprend en outre des moyens pour :
- constater qu'au moins l'un des chemins permettant d'atteindre ledit dispositif-client est compatible avec les connexions TCP à chemins multiples, et
- utiliser des options TCP à chemins multiples pour établir des connexions avec un autre dispositif-client le long dudit chemin compatible avec les connexions TCP à chemins multiples.

Grâce à l'invention, le dispositif-client auquel le dispositif-relais est connecté bascule alors sans délai vers une connexion TCP simple.

Les avantages offerts par ces dispositifs communicants sont essentiellement les mêmes que ceux offerts par les procédés corrélatifs succinctement exposés ci-dessus.

Dans un mode particulier de réalisation, le serveur de test, auquel il est fait référence dans les revendications indépendantes, possède des moyens pour mettre en oeuvre une connexion TCP à chemins multiples, ainsi que des moyens pour :
- recevoir une demande d'établissement d'une connexion TCP à chemins multiples de la part d'un dispositif communicant, et
- tenter d'établir au moins une connexion TCP à chemins multiples avec ledit dispositif communicant le long d'au moins un chemin de communication entre eux.

Ledit serveur de test est remarquable en ce que lesdits moyens pour tenter d'établir une connexion à chemins multiples avec le dispositif communicant comprennent des moyens pour échanger avec le dispositif communicant des données de test permettant au dispositif communicant de déterminer si les options TCP à chemins multiples envoyées par le dispositif communicant, respectivement par ledit serveur de test, sont reçues correctement par le serveur de test, respectivement par le dispositif communicant.

Les avantages offerts par ce serveur de test sont essentiellement les mêmes que ceux offerts par les procédés corrélatifs succinctement exposés ci-dessus.

On notera qu'il est possible de réaliser ces divers dispositifs dans le contexte d'instructions logicielles et/ou dans le contexte de circuits électroniques.

L'invention vise également un programme d'ordinateur téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes du procédé de communication succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, décrite ci-dessus, représente un agrégat de sous-sessions TCP formant une unique connexion MPTCP,
- la figure 2, décrite ci-dessus, représente l'échec d'une tentative d'établissement d'une sous-session TCP vers le terminal B à partir d'un terminal A, suite au filtrage des options MPTCP par des fonctions service,
- la figure 3, décrite ci-dessus, représente l'échec d'une tentative d'établissement d'une sous-session TCP vers le terminal B à partir d'un terminal A, suite au filtrage des options DSS par des fonctions service,
- la figure 4 illustre une configuration de réseau comprenant trois terminaux T1, T2 et T3,
- la figure 5 illustre une procédure de test exécutée par un terminal T1 avec un serveur de test CHECK_SERVER_1, selon un mode de réalisation de l'invention,
- la figure 6 illustre une procédure de test exécutée par un terminal T2 avec un serveur de test CHECK_SERVER_2, selon un mode de réalisation de l'invention, et
- la figure 7 illustre l'application d'un mode de réalisation de l'invention à une configuration de réseau comprenant un terminal TCP ou MPTCP, désigné par T sur la figure, placé derrière un dispositif-relais R compatible avec MPTCP.

La découverte des divers chemins connectant un terminal donné à un correspondant donné peut être réalisée, par exemple, à l'aide d'un protocole d'allocation dynamique d'adresses IP comme DHCP (Dynamic Host Configuration Protocol), ou par un mécanisme de création de *mapping,* tel que PCP (Port Control Protocol), UPnP (Universal Plug and Play), IGD (Internet Gateway Device), ou STUN (Session Traversai Utilities for NAT). On rappelle à cet égard que l'on appelle « *mapping* » l'association d'une adresse IP interne et d'un numéro de port interne avec une adresse IP externe et un numéro de port externe. Dans le cas d'un NAT, l'adresse IP interne et le numéro de port interne sont les informations servant de données d'entrée, alors que l'adresse IP externe et le numéro de port externe sont alloués par le NAT. Dans le cas d'un pare-feu, les informations internes et externes sont identiques. Un *mapping* peut inclure d'autres informations, telles que l'adresse IP et le numéro de port du correspondant ou un identifiant du protocole de communication utilisé.

On notera que l'invention peut être mise en oeuvre à la fois par un premier dispositif-client et par un deuxième dispositif-client avec lequel le premier dispositif-client souhaite établir une connexion à chemins multiples, ou par seulement l'un d'entre eux; dans ce dernier cas, l'autre dispositif-client peut éventuellement mettre en œuvre un autre procédé que le procédé selon l'invention pour connaître la compatibilité des chemins reliant ces deux dispositifs-clients avec les connexions à chemins multiples.

L'invention propose un nouvel attribut à inclure dans les tables de connexion à chemins multiples. Cet attribut, que l'on appellera « PATH_CHECKED » est valorisé à « 1 » pour indiquer qu'un chemin est compatible avec les connexions à chemins multiples, et valorisé à « 0 » dans le cas contraire.

L'invention propose par ailleurs de déployer au moins un serveur de test (que l'on appellera « CHECK_ SERVER ») apte à mettre en oeuvre la présente invention, et dont le rôle est notamment d'aider un terminal à déterminer si les fonctions service (par exemple, NAT ou pare-feu) situées en coupure de flux sur les chemins permettant d'atteindre ce terminal sont compatibles avec les connexions à chemins multiples. On notera que :
- ce serveur de test est un dispositif compatible avec les connexions à chemins multiples ;
- on peut déployer à cet effet un ou plusieurs serveur(s) de test; en particulier, il n'est nullement obligatoire pour tous les terminaux de solliciter un même serveur de test, et il n'est nullement obligatoire pour un terminal donné de solliciter le même serveur de test au fur et à mesure de l'évolution des conditions d'attachement réseau de ce terminal ; et
- ces serveurs de test ne sont pas nécessairement localisés dans le même domaine réseau que le terminal ; autrement dit, un serveur de test peut être localisé dans un domaine réseau différent de celui auquel est connecté le terminal ; ces deux domaines réseau peuvent ainsi être placés sous la responsabilité de gestion de deux entités administratives distinctes, à condition que cela n'inhibe pas la capacité du terminal à solliciter un tel serveur de test connecté à un autre domaine réseau que celui auquel est connecté le terminal pour qualifier la compatibilité des divers chemins multiples disponibles avec l'établissement de connexions à chemins multiples ou de sous-sessions TCP.

L'invention s'applique de manière générale à tout protocole concernant les connexions TCP à chemins multiples. On va décrire à présent l'application de l'invention au protocole MPTCP décrit succinctement ci-dessus. En particulier, l'API MPTCP, mentionnée ci-dessus, doit être modifiée pour que l'on puisse transmettre aux applications la valeur de l'attribut PATH_CHECKED selon l'invention.

Le protocole MPTCP comprend classiquement un certain nombre de dispositions, dont notamment la définition des options TCP suivantes :
- MP_CAPABLE : cette option est utilisée pour signaler au terminal distant que le terminal émetteur est compatible avec les options MPTCP ;
- ADD_ADDR : cette option est utilisée pour ajouter une nouvelle adresse ; elle comprend un champ optionnel de deux octets permettant de fournir également un numéro de port, le cas échéant ;
- REMOVE_ADDR : cette option est utilisée pour supprimer une adresse ;
- MP_PRIO : cette option est utilisée pour modifier la priorité d'une connexion ;
- MP_JOIN : cette option est utilisée pour identifier la connexion TCP qui est associée à l'établissement d'une nouvelle sous-session ;
- MP_FAIL : cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :
- *mode natif* : deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ;
   en cas de panne, le trafic est basculé vers une nouvelle sous-session créée à cet effet.

On va décrire à présent un mode de réalisation du procédé de communication selon l'invention.

Ce mode de réalisation peut être mis en oeuvre, par exemple, au démarrage d'un terminal, ou à chaque changement de conditions d'attachement d'un terminal au réseau (par exemple, attachement à un nouveau réseau), ou encore suite à la détection par un terminal d'un nouveau chemin. Il comprend une phase de test dont les résultats sont, de préférence, sauvegardés dans un cache local ; l'attribut PATH_CHECKED peut être utilisé à cet effet.

Lors d'une étape E1, un terminal T fait la découverte d'un serveur de test CHECK_SERVER:
- si une adresse du serveur de test CHECK_ SERVER a été explicitement configurée dans le terminal T, le terminal T utilise cette adresse pour contacter le serveur de test ;
- si aucune adresse n'est configurée explicitement dans le terminal T, le terminal T utilise une « adresse connue » (« *Well-Known Address* », ou WKA, en anglais) de type *anycast,* ou un « nom de domaine connu » (« *Well-Known Domain »,* ou WKDN, en anglais), afin de simplifier les opérations de configuration et de découverte des serveurs CHECK_SERVER par les terminaux ; on rappelle à cet égard que, dans le mode de diffusion de messages dit « *anycast »,* chaque adresse de destination identifie un ensemble déterminé de récepteurs, mais un seul de ces récepteurs est sélectionné pour recevoir un message à un moment donné de la part d'un émetteur donné, le récepteur sélectionné étant généralement celui dont la distance qui le sépare de l'émetteur est la plus courte au sens du routage IP.

Lors d'une étape E2, le terminal T exécute, pour au moins un chemin permettant de l'atteindre, une procédure de test dudit chemin avec l'aide d'au moins un serveur CHECK _SERVER ; comme mentionné ci-dessus, un terminal peut exécuter cette procédure de test soit avec un seul serveur CHECK_SERVER, soit avec plusieurs serveurs CHECK_SERVER afin d'améliorer la qualité des tests et la pertinence des résultats.

Le terminal T met en oeuvre cette procédure de test, de préférence, lors d'un redémarrage du terminal, ou lors de chaque attachement à un nouveau réseau, ou encore lorsqu'un nouveau chemin permettant d'atteindre le terminal T est découvert.

De plus, le terminal T met en oeuvre cette procédure de test, de préférence, pour l'ensemble des chemins connus du terminal T. La procédure de test d'une pluralité de chemins peut être mise en oeuvre séparément (c'est-à-dire, en établissant autant de connexions MPTCP qu'il existe de chemins multiples disponibles), ou collectivement au sein d'une seule connexion MPTCP (c'est-à-dire, en ajoutant des sous-sessions TCP à une connexion MPTCP principale, ces sous-sessions correspondant aux chemins multiples autres que celui utilisé pour établir la connexion MPTCP principale).

La procédure de test comprend l'initialisation, par le terminal T ou par le serveur CHECK_SERVER, d'au moins une connexion MPTCP le long d'au moins un chemin de communication entre eux. Le terminal T et le serveur CHECK_SERVER échangent des données de test afin, au moins, de :
- déterminer si les options TCP (notamment les options DSS) envoyées par le terminal T (respectivement, le serveur CHECK_SERVER) sont reçues correctement par le serveur CHECK _SERVER (respectivement, le terminal T), et
- vérifier le comportement des fonctions service situées en coupure de flux sur ledit chemin en ce qui concerne le traitement des options MPTCP, et, en particulier, déterminer si les options MPTCP envoyées par le terminal T (respectivement, le serveur CHECK _SERVER) sont reçues correctement par le serveur CHECK_SERVER (respectivement, le terminal T).

Le terminal T peut, par exemple, conclure qu'une anomalie a été détectée par le serveur CHECK_SERVER sur la base de l'observation que le serveur CHECK_SERVER a basculé vers le mode TCP simple. Le terminal T peut aussi détecter localement qu'au moins un des chemins n'est pas compatible avec les communications MPTCP, notamment lorsque c'est le serveur CHECK_SERVER qui a initialisé une connexion MPTCP ou une sous-session TCP.

Ensuite, lors d'une étape E3 :
- si aucune anomalie n'a été détectée par le terminal T ou par un serveur CHECK_SERVER, le terminal T met à jour sa table de chemins multiples en positionnant l'attribut PATH_CHECKED à « 1 » pour indiquer que ledit chemin est compatible avec le mode de communication à chemins multiples ;
- si, en revanche, une anomalie a été détectée par le terminal T ou un serveur de test CHECK _SERVER, le terminal T met à jour sa table de chemins multiples en positionnant l'attribut PATH_CHECKED à « 0 » pour indiquer que ce chemin n'est pas compatible avec le mode de communication à chemins multiples.

Suite à la mise en oeuvre des étapes E1 à E3 ci-dessus :
- si aucun des chemins permettant d'atteindre le terminal T n'est compatible avec les connexions MPTCP (c'est-à-dire, si l'attribut PATH_CHECKED de tous les chemins multiples pour toutes les interfaces réseau du terminal T est valorisé à « 0 ») :
   ∘le terminal T utilise le mode de transport TCP simple pour établir des connexions *sortantes* avec ses correspondants TCP (i.e., le mode TCP à chemins multiples est désactivé par ce terminal tant que les conditions d'attachement au réseau ne sont pas favorablement modifiées), et
   ∘pour une connexion à chemins multiples *entrante,* le terminal T n'inclut pas d'options MPTCP dans ses messages à destination de son correspondant (autrement dit, le terminal se comporte comme s'il n'était pas compatible avec MPTCP) ; suite à la réception d'un tel message sans options MPTCP par le correspondant du terminal T, le correspondant bascule sans délai vers une connexion TCP simple, conformément au « mode repli » classique ;

- s'il existe en revanche au moins un chemin compatible avec les connexions MTPCP (c'est-à-dire, si l'attribut PATH_CHECKED d'au moins un des chemins multiples est valorisé à « 1 »), le terminal T utilise les options MPTCP pour établir des connexions à chemins multiples avec un correspondant le long du, ou des, chemin(s) compatible(s) ; de plus, le terminal T s'abstient d'annoncer à ce correspondant les éventuels chemins incompatibles avec les connexions MPTCP, de manière à éviter l'échec d'une tentative d'établissement d'une connexion à chemins multiples le long d'un chemin incompatible.

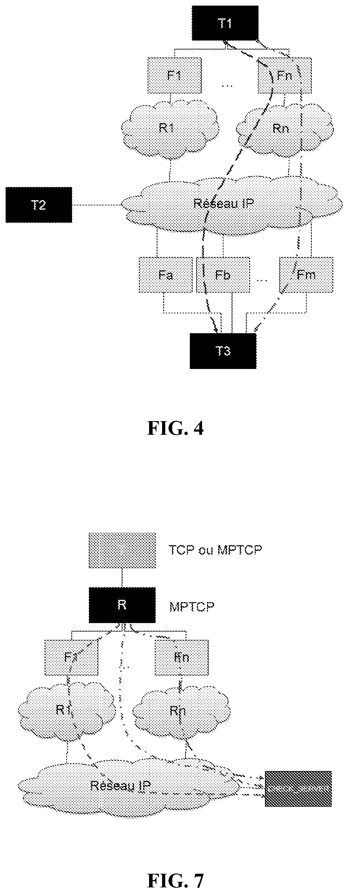

La **figure 4** illustre une configuration de réseau comprenant trois terminaux T1, T2 et T3. On voit sur cette figure :
- un terminal T1 connecté à un ou plusieurs réseau(x) IP via n noeuds de raccordement (F1, F2, ..., Fn) et n réseaux d'accès R1, R2, ..., Rn respectifs ; ces noeuds de raccordement peuvent héberger des fonctions service telles qu'un NAT ou un pare-feu, ou être des routeurs IP qui n'embarquent aucune fonction service telle qu'un NAT ou un pare-feu ;
- un terminal T2 connecté à un réseau IP via un seul noeud de raccordement ; on suppose que T2 est compatible avec MPTCP, et qu'une adresse IP unique lui a été allouée ; et
- un terminal T3 connecté à un ou plusieurs réseau(x) IP via m noeuds de raccordement (Fa, Fb, ..., Fm) ; ces noeuds peuvent héberger des fonctions service telles qu'un NAT ou un pare-feu, ou être des routeurs IP qui n'embarquent aucune fonction service telle qu'un NAT ou un pare-feu.

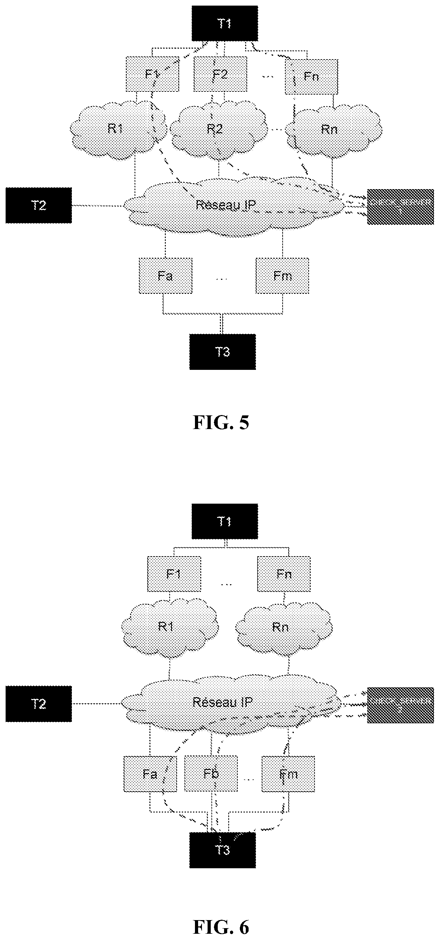

Supposons que, comme illustré sur la **figure 5****,** le terminal T1 a mis en oeuvre, avec le serveur CHECK _SERVER_1, le mode de réalisation de l'invention décrit ci-dessus, et qu'il en a conclu que :
oF1 filtre les options MPTCP,
oF2 ne filtre que les options MPTCP des paquets de données, et
oFn ne filtre ni ne modifie aucune des options MPTCP.

Supposons également que, comme illustré sur la **figure 6****,** le terminal T3 a mis en oeuvre, avec le serveur CHECK_ SERVER_2, le mode de réalisation de l'invention décrit ci-dessus, et qu'il en a conclu que :
oFa filtre les options MPTCP,
oFb ne filtre ni ne modifie aucune des options MPTCP, et
oFm ne filtre ni ne modifie aucune des options MPTCP.

Ainsi, les chemins MPTCP valides entre T1 et T3 sont les suivants :
- le chemin passant par Fn et Fb, et
- le chemin passant par Fn et Fm.

Supposons enfin que le terminal T1 veuille établir une connexion MPTCP avec le terminal T3. La figure 4 illustre les sous-sessions TCP établies entre les terminaux T1 et T3.

Le terminal T1 indique à son correspondant qu'il est compatible avec les connexions MPTCP, mais n'annonce que le chemin qui implique Fn. Le terminal T3 indique à son correspondant qu'il est compatible avec les connexions à chemins multiples, mais n'annonce que les chemins qui impliquent Fb et Fm. Ainsi, T1 et T3 peuvent établir :
- une sous-session TCP impliquant Fn (côté T1) et Fb (côté T3), et
- une sous-session TCP impliquant Fn (côté T1) et Fm (côté T3).

La **figure 7** illustre une application de l'invention à une configuration de réseau comprenant un terminal T compatible avec TCP ou MPTCP, placé derrière un dispositif-relais R (tel qu'un routeur ou une passerelle résidentielle) compatible avec MPTCP et apte à mettre en oeuvre la présente invention.

Ce dispositif-relais R est connecté à un ou plusieurs réseaux IP via n noeuds de raccordement (F1, F2, ..., Fn) et n réseaux d'accès R1, R2, ..., Rn respectifs ; ces noeuds de raccordement peuvent héberger des fonctions service telles qu'un NAT ou un pare-feu, ou être des routeurs IP qui n'embarquent aucune fonction service telle qu'un NAT ou un pare-feu.

On notera que si le terminal T est compatible avec MPTCP, il peut mettre en oeuvre le présent mode de réalisation même en présence du dispositif-relais R. Dans ce cas, le dispositif-relais R procède comme suit.

Tout d'abord, le terminal T exécute les étapes décrites ci-dessus. Pour des besoins de simplification, le dispositif-relais R peut avantageusement être présenté au terminal T (par exemple, par configuration explicite) comme étant « son » serveur CHECK_SERVER ; il suffit pour ce faire de configurer le terminal T de manière à ce que l'adresse du serveur CHECK_SERVER soit l'adresse du dispositif-relais R.

Le dispositif-relais R intercepte ensuite les messages de test envoyés par le terminal T, et répond à chacun de ces messages. Pour ce faire, il procède comme suit :
a) si le dispositif-relais R a précédemment exécuté une procédure de test analogue à celle décrite ci-dessus en référence à l'étape E2 :
   o si au moins un des chemins multiples connus du dispositif-relais R est compatible avec les connexions MPTCP (c'est-à-dire, si l'attribut PATH_CHECKED d'au moins un des chemins multiples est valorisé à « 1 »), le dispositif-relais R répond positivement au terminal T, c'est-à-dire qu'il confirme au terminal T la capacité d'établir des connexions MPTCP ;
   o si aucun des chemins multiples connus du dispositif-relais R n'est compatible avec les connexions MPTCP (c'est-à-dire, si l'attribut PATH_CHECKED de tous les chemins multiples est valorisé à « 0 »), le dispositif-relais R répond négativement au terminal T, c'est-à-dire qu'il indique au terminal T qu'il ne lui sera pas possible d'exploiter les ressources du protocole MPTCP pour établir une connexion TCP avec un correspondant ;
b) si le dispositif-relais R n'a pas encore exécuté une procédure de test analogue à celle décrite en référence à l'étape E2, il met en attente le message de test reçu de la part du terminal T, et exécute la procédure de test avec un serveur de test distant ; une fois la procédure de test achevée, le dispositif-relais R procède comme décrit en a) ci-dessus.

Lorsque le terminal T initialise une connexion TCP à chemins multiples :
- le dispositif-relais R achemine les paquets de données en utilisant le, ou les, chemin(s) dont l'attribut PATH_CHECKED est positionné à « 1 » ;
- si le dispositif-relais R ne dispose d'aucun chemin, autre que sa connexion au terminal T, compatible avec les connexions MPTCP, et s'il reçoit néanmoins un message d'initialisation de connexion à chemins multiples de la part du terminal T, le dispositif-relais R ne transmet pas ce message d'initialisation à son destinataire ; de plus, le dispositif-relais R répond au terminal T (en se faisant ainsi passer pour le correspondant du terminal T) en n'incluant aucune option MPTCP dans sa réponse ; T bascule alors sans délai vers une connexion TCP simple, conformément au « mode repli » classique.

L'invention peut être mise en oeuvre au sein de noeuds de réseaux de communications, par exemple des terminaux, des routeurs ou des passerelles, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de communication selon l'invention.

En effet, l'invention vise aussi un programme d'ordinateur tel que décrit succinctement ci-dessus. Ce programme d'ordinateur peut être stocké sur un support lisible par ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations inamovible, ou partiellement ou totalement amovible, comportant des instructions d'un programme d'ordinateur tel que décrit succinctement ci-dessus.

Ce support d'informations peut être n'importe quelle entité ou dispositif capable de stocker le programme. Par exemple, le support d'informations peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de communication selon l'invention.

## Revendications

1. Procédé de communication dans un réseau IP, comprenant les étapes suivantes mises en oeuvre par un dispositif-client (T, T1, T2, T3) apte à mettre en oeuvre une connexion TCP, Transmission Control Protocol, simple et une connexion TCP à chemins multiples :
- une étape de découverte (E1) d'au moins un serveur de test (CHECK_SERVER) apte à mettre en oeuvre une connexion TCP à chemins multiples,
- une étape de tentative d'établissement (E2) d'au moins une connexion TCP à chemins multiples avec le serveur de test (CHECK_SERVER) le long d'au moins un chemin permettant d'atteindre ledit dispositif-client (T, T1, T2, T3), ladite étape comprenant une détermination en échangeant des données de test avec le serveur de test (CHECK_SERVER) :
si des options TCP à chemins multiples envoyées par le dispositif-client (T, T1, T2, T3) ou par le serveur de test (CHECK_SERVER) sont filtrées ou modifiées par une fonction de service située en coupure de flux sur ledit chemin, ou
si elles sont reçues correctement par le serveur de test (CHECK_SERVER) ou par le dispositif-client (T, T1, T2, T3),
- une étape d'enregistrement (E3) d'un statut (PATH_CHECKED) dudit chemin quant à sa compatibilité avec des connexions TCP à chemins multiples, ledit statut étant déterminé en fonction d'un résultat de ladite détermination par le dispositif-client, ledit statut indiquant une compatibilité dudit chemin avec des connexions TCP à chemins multiples s'il est déterminé lors de ladite détermination que les options TCP à chemins multiples sont reçues correctement, et une incompatibilité avec des connexions TCP à chemins multiples sinon ;
le procédé étant **caractérisé en ce qu'**il comprend en outre:
- si aucun des chemins permettant d'atteindre ledit dispositif-client (T, T1, T2, T3) n'est compatible avec des connexions TCP à chemins multiples, une étape au cours de laquelle ledit dispositif-client (T, T1, T2, T3) utilise le mode de transport TCP simple pour établir une connexion avec un autre dispositif-client, ou se connecter à un autre dispositif-client, suite à la réception d'un message d'établissement d'une connexion à chemins multiples envoyé par cet autre dispositif-client.

2. Procédé de communication selon la revendication 1 comprenant en outre, si le dispositif-client (T, T1, T2, T3) constate qu'au moins l'un des chemins permettant d'atteindre ce dispositif-client (T, T1, T2, T3) est compatible avec des connexions TCP à chemins multiples, une étape au cours de laquelle ledit dispositif-client (T, T1, T2, T3) utilise des options TCP à chemins multiples pour établir des connexions avec un autre dispositif-client le long dudit au moins un chemin compatible avec des connexions TCP à chemins multiples.

3. Dispositif-client possédant des moyens pour mettre en oeuvre une connexion TCP, Transmission Control Protocol, simple et pour mettre en oeuvre une connexion TCP à chemins multiples, comprenant en outre des moyens pour:
- découvrir au moins un serveur de test (CHECK_SERVER) apte à mettre en oeuvre une connexion TCP à chemins multiples,
- envoyer audit serveur de test (CHECK_SERVER) une demande d'établissement d'une connexion TCP à chemins multiples,
- tenter d'établir au moins une connexion TCP à chemins multiples avec ledit serveur de test (CHECK_SERVER) le long d'au moins un chemin de communication entre eux, et
- enregistrer un statut (PATH_CHECKED) dudit chemin quant à sa compatibilité avec des connexions TCP à chemins multiples,
lesdits moyens pour tenter d'établir une connexion TCP à chemins multiples avec ledit serveur de test (CHECK_SERVER) comprenant des moyens pour déterminer en échangeant des données de test avec le serveur de test (CHECK_SERVER) durant la tentative d'établissement de la connexion TCP à chemins multiples:
si des options TCP à chemins multiples envoyées par ledit dispositif-client (T, T1, T2, T3, R) ou par ledit serveur de test (CHECK_SERVER), sont filtrées ou modifiées par une fonction de service située en coupure de flux sur ledit chemin, ou
si elles sont reçues correctement par le serveur de test (CHECK_SERVER) ou par le dispositif-client (T, T1, T2, T3, R),
lesdits moyens pour enregistrer le statut dudit chemin étant configurés pour enregistrer un statut indiquant une compatibilité dudit chemin avec des connexions TCP à chemins multiples si les moyens pour déterminer déterminent que les options TCP à chemins multiples sont reçues correctement, et un statut indiquant une incompatibilité avec des connexions TCP à chemins multiples sinon ;
ledit dispositif-client étant caractérisé en qu'il comprend en outre des moyens pour, si aucun des chemins permettant d'atteindre ledit dispositif-client (T, T1, T2, T3) n'est compatible avec des connexions TCP à chemins multiples, utiliser le mode de transport TCP simple pour établir une connexion avec un autre dispositif-client, ou se connecter à un autre dispositif-client, suite à la réception d'un message d'établissement d'une connexion à chemins multiples envoyé par cet autre dispositif-client.

4. Dispositif-client selon la revendication 3, comprenant en outre des moyens pour :
- constater qu'au moins l'un des chemins permettant d'atteindre ledit dispositif-client (T, T1, T2, T3) est compatible avec des connexions TCP à chemins multiples, et
- utiliser des options TCP à chemins multiples pour établir des connexions avec un autre dispositif-client le long dudit chemin compatible avec des connexions TCP à chemins multiples.

5. Procédé de communication dans un réseau IP, comprenant les étapes suivantes mises en oeuvre par un dispositif-relais (R) apte à mettre en oeuvre une connexion TCP, Transmission Control Protocol, simple et une connexion TCP à chemins multiples, ledit dispositif-relais (R) étant connecté à un dispositif-client (T) apte ou non à mettre en oeuvre une connexion TCP à chemins multiples :
- une étape de découverte (E1) d'au moins un serveur de test (CHECK_SERVER) apte à mettre en oeuvre une connexion TCP à chemins multiples,
- une étape de tentative d'établissement (E2) d'au moins une connexion TCP à chemins multiples avec le serveur de test (CHECK_SERVER) le long d'au moins un chemin permettant d'atteindre le dispositif-relais (R), ladite étape comprenant une détermination par le dispositif-relais, en échangeant des données de test avec le serveur de test (CHECK_SERVER) :
si des options TCP à chemins multiples envoyées par le dispositif relais (R) ou par le serveur de test (CHECK_SERVER) sont filtrées ou modifiées par une fonction de service située en coupure de flux sur ledit chemin, ou
si elles sont reçues correctement par le serveur de test (CHECK_SERVER) ou par le dispositif-relais (R),
- une étape d'enregistrement (E3) d'un statut (PATH_CHECKED) dudit chemin quant à sa compatibilité avec des connexions TCP à chemins multiples, ledit statut étant déterminé en fonction d'un résultat de ladite détermination par le dispositif-relais, ledit statut indiquant une compatibilité dudit chemin avec des connexions TCP à chemins multiples s'il est déterminé lors de ladite détermination que les options TCP à chemins multiples sont reçues correctement, et une incompatibilité avec des connexions TCP à chemins multiples sinon ; et
- si aucun des chemins permettant d'atteindre ledit dispositif-relais (R) autre que sa connexion audit dispositif-client (T) n'est compatible avec des connexions TCP à chemins multiples, une étape au cours de laquelle s'il reçoit de la part du dispositif-client (T) un message d'initialisation de connexion à chemins multiples avec un autre dispositif-client, il répond au dispositif-client (T) en n'incluant dans sa réponse aucune option TCP à chemins multiples.

6. Dispositif-relais possédant des moyens pour mettre en oeuvre une connexion TCP, Transmission Control Protocol, simple et pour mettre en oeuvre une connexion TCP à chemins multiples, ledit dispositif-relais étant connecté à un dispositif-client apte ou non à mettre en oeuvre une connexion TCP à chemins multiples, ledit dispositif-relais comprenant en outre des moyens pour :
- découvrir au moins un serveur de test (CHECK_SERVER) apte à mettre en oeuvre une connexion TCP à chemins multiples,
- envoyer audit serveur de test (CHECK_SERVER) une demande d'établissement d'une connexion TCP à chemins multiples,
- tenter d'établir au moins une connexion TCP à chemins multiples avec ledit serveur de test (CHECK_SERVER) le long d'au moins un chemin de communication entre eux, et
- enregistrer un statut (PATH_CHECKED) dudit chemin quant à sa compatibilité avec des connexions TCP à chemins multiples,
lesdits moyens pour tenter d'établir une connexion TCP à chemins multiples avec ledit serveur de test (CHECK_SERVER) comprenant des moyens pour déterminer en échangeant des données de test avec le serveur de test (CHECK_SERVER) durant la tentative d'établissement de la connexion TCP à chemins multiples:
- si des options TCP à chemins multiples envoyées par ledit dispositif-relais (T, T1, T2, T3, R) ou par ledit serveur de test (CHECK_SERVER), sont filtrées ou modifiées par une fonction de service située en coupure de flux sur ledit chemin, ou
- si elles sont reçues correctement par le serveur de test (CHECK_SERVER) ou par le dispositif-relais (T, T1, T2, T3, R), et lesdits moyens pour enregistrer le statut dudit chemin étant configurés pour enregistrer un statut indiquant une compatibilité dudit chemin avec des connexions TCP à chemins multiples si les moyens pour déterminer déterminent que les options TCP à chemins multiples sont reçues correctement, et un statut indiquant une incompatibilité avec des connexions TCP à chemins multiples sinon ;
ledit dispositif-relais comprenant en outre des moyens pour, si aucun des chemins permettant d'atteindre ledit dispositif-relais autre que sa connexion audit dispositif-client (T) n'est compatible avec des connexions TCP à chemins multiples et s'il reçoit de la part dudit dispositif-client (T) un message d'initialisation de connexion à chemins multiples avec un autre dispositif-client, répondre audit dispositif-client (T) en n'incluant dans sa réponse aucune option TCP à chemins multiples.

7. Système comprenant :
- un serveur de test (CHECK_SERVER), possédant des moyens pour mettre en oeuvre une connexion TCP, Transmission Control Protocol, à chemins multiples ; et
- un dispositif communicant (T, T1, T2, T3, R) comprenant un dispositif-client selon la revendication 3 ou un dispositif-relais selon la revendication 6 connecté à un dispositif-client, apte à découvrir ledit serveur de test et à établir au moins une connexion TCP à chemins multiples avec ledit serveur de test le long d'au moins un chemin de communication entre eux.

8. Moyen de stockage de données inamovible, ou partiellement ou totalement amovible, comportant des instructions de code de programme informatique pour l'exécution des étapes d'un procédé de communication selon l'une quelconque des revendications 1, 2 ou 5, lorsque les instructions sont exécutées sur un ordinateur.

9. Programme d'ordinateur téléchargeable depuis un réseau de communications et/ou stocké sur un support lisible par ordinateur et/ou exécutable par un microprocesseur, comprenant des instructions pour l'exécution des étapes d'un procédé de communication selon l'une quelconque des revendications 1, 2 ou 5, lorsqu'il est exécuté sur un ordinateur.

## Patentansprüche

1. Kommunikationsverfahren in einem IP-Netz, umfassend die folgenden Schritte, die durch eine Client-Vorrichtung (T, T1, T2, T3) durchgeführt werden, die dazu geeignet ist, eine einfache TCP (Transmission Control Protocol)-Verbindung und eine Mehrwege-TCP-Verbindung durchzuführen:
- einen Schritt des Erkennens (E1) mindestens eines Testservers (CHECK_SERVER), der dazu geeignet ist, eine Mehrwege-TCP-Verbindung durchzuführen,
- einen Schritt des Versuchens einer Herstellung (E2) mindestens einer Mehrwege-TCP-Verbindung mit dem Testserver (CHECK_SERVER) über mindestens einen Weg, der es ermöglicht, die Client-Vorrichtung (T, T1, T2, T3) zu erreichen, wobei der Schritt eine Ermittlung durch Austauschen von Testdaten mit dem Testserver (CHECK_SERVER) umfasst:
ob Mehrwege-TCP-Optionen, die von der Client-Vorrichtung (T, T1, T2, T3) oder vom Testserver (CHECK_SERVER) gesendet werden, durch eine Dienstfunktion, die sich als Unterbrechung des Flusses auf diesem Weg befindet, gefiltert oder geändert werden,
ob sie vom Testserver (CHECK_SERVER) oder von der Client-Vorrichtung (T, T1, T2, T3) richtig empfangen werden,
- einen Schritt des Speicherns (E3) eines Status (PATH_CHECKED) des Weges hinsichtlich seiner Kompatibilität mit Mehrwege-TCP-Verbindungen, wobei der Status abhängig von einem Ergebnis der Ermittlung durch die Client-Vorrichtung ermittelt wird, wobei der Status eine Kompatibilität des Weges mit Mehrwege-TCP-Verbindungen angibt, wenn bei der Ermittlung ermittelt wird, dass die Mehrwege-TCP-Optionen richtig empfangen werden, und andernfalls eine Inkompatibilität mit Mehrwege-TCP-Verbindungen;
wobei das Verfahren **dadurch gekennzeichnet ist, dass** es außerdem umfasst:
- wenn keiner der Wege, die es ermöglichen, die Client-Vorrichtung (T, T1, T2, T3) zu erreichen, mit den Mehrwege-TCP-Verbindungen kompatibel ist, einen Schritt, bei dem die Client-Vorrichtung (T, T1, T2, T3) den einfachen TCP-Transportmodus nutzt, um eine Verbindung mit einer anderen Client-Vorrichtung herzustellen oder sich mit einer anderen Client-Vorrichtung zu verbinden, nach dem Empfang einer Meldung über die Herstellung einer Mehrwegeverbindung, die durch diese andere Client-Vorrichtung gesendet wurde.

2. Kommunikationsverfahren nach Anspruch 1, außerdem, wenn die Client-Vorrichtung (T, T1, T2, T3) feststellt, dass mindestens einer der Wege, die es ermöglichen, diese Client-Vorrichtung (T, T1, T2, T3) zu erreichen, mit Mehrwege-TCP-Verbindungen kompatibel ist, einen Schritt umfassend, bei dem die Client-Vorrichtung (T, T1, T2, T3) Mehrwege-TCP-Optionen nutzt, um Verbindungen mit einer anderen Client-Vorrichtung über mindestens einen Weg herzustellen, der mit Mehrwege-TCP-Verbindungen kompatibel ist.

3. Client-Vorrichtung, die Mittel besitzt, um eine einfache TCP (Transmission Control Protocol)-Verbindung durchzuführen oder um eine Mehrwege-TCP-Verbindung durchzuführen, und die außerdem Mittel zu Folgendem umfasst:
- Erkennen mindestens eines Testservers (CHECK_SERVER), der dazu geeignet ist, eine Mehrwege-TCP-Verbindung durchzuführen,
- Senden einer Anfrage zur Herstellung einer Mehrwege-TCP-Verbindung an den Testserver (CHECK_SERVER) ,
- Versuchen einer Herstellung mindestens einer Mehrwege-TCP-Verbindung mit dem Testserver (CHECK_SERVER) über mindestens einen Kommunikationsweg zwischen ihnen, und
- Speichern eines Status (PATH_CHECKED) des Weges hinsichtlich seiner Kompatibilität mit Mehrwege-TCP-Verbindungen,
wobei die Mittel zum Versuchen einer Herstellung einer Mehrwege-TCP-Verbindung mit dem Testserver (CHECK_SERVER) Mittel zum Ermitteln durch Austauschen von Testdaten mit dem Testserver (CHECK_SERVER) während des Versuchs einer Herstellung der Mehrwege-TCP-Verbindung umfassen:
ob Mehrwege-TCP-Optionen, die von der Client-Vorrichtung (T, T1, T2, T3, R) oder vom Testserver (CHECK_SERVER) gesendet werden, durch eine Dienstfunktion, die sich als Unterbrechung des Flusses auf diesem Weg befindet, gefiltert oder geändert werden,
ob sie vom Testserver (CHECK_SERVER) oder von der Client-Vorrichtung (T, T1, T2, T3, R) richtig empfangen werden,
wobei die Mittel zum Speichern des Status des Weges dazu konfiguriert sind, einen Status zu speichern, der eine Kompatibilität des Weges mit Mehrwege-TCP-Verbindungen angibt, wenn die Mittel zum Ermitteln ermitteln, dass die Mehrwege-TCP-Optionen richtig empfangen werden, und andernfalls einen Status, der eine Inkompatibilität mit Mehrwege-TCP-Verbindungen angibt;
wobei die Client-Vorrichtung **dadurch gekennzeichnet ist, dass** sie, wenn keiner der Wege, die es ermöglichen, die Client-Vorrichtung (T, T1, T2, T3) zu erreichen, mit Mehrwege-TCP-Verbindungen kompatibel ist, außerdem Mittel zum Verwenden des einfachen TCP-Transportmodus zum Herstellen einer Verbindung mit einer anderen Client-Vorrichtung oder zum Aufnehmen einer Verbindung mit einer anderen Client-Vorrichtung nach Empfang einer Meldung über eine Herstellung einer Mehrwege-Verbindung, die durch diese andere Client-Vorrichtung gesendet wurde, umfasst.

4. Client-Vorrichtung nach Anspruch 3, außerdem umfassend Mittel zum:
- Feststellen, dass mindestens einer der Wege, die es ermöglichen, die Client-Vorrichtung (T, T1, T2, T3) zu erreichen, mit Mehrwege-TCP-Verbindungen kompatibel ist, und
- Verwenden von Mehrwege-TCP-Optionen zum Herstellen von Verbindungen mit einer anderen Client-Vorrichtung über den Weg, der mit Mehrwege-TCP-Verbindungen kompatibel ist.

5. Kommunikationsverfahren in einem IP-Netz, umfassend die folgenden Schritte, die durch eine Relaisvorrichtung (R) durchgeführt werden, die dazu geeignet ist, eine einfache TCP (Transmission Control Protocol)-Verbindung und eine Mehrwege-TCP-Verbindung durchzuführen, wobei die Relais-Verbindung (R) mit einer Client-Vorrichtung (T) verbunden ist, die geeignet oder nicht geeignet ist, eine Mehrwege-TCP-Verbindung durchzuführen:
- einen Schritt des Erkennens (E1) mindestens eines Testservers (CHECK_SERVER), der dazu geeignet ist, eine Mehrwege-TCP-Verbindung durchzuführen,
- einen Schritt des Versuchens einer Herstellung (E2) mindestens einer Mehrwege-TCP-Verbindung mit dem Testserver (CHECK_SERVER) über mindestens einen Weg, der es ermöglicht, die Relaisvorrichtung (R) zu erreichen, wobei der Schritt eine Ermittlung durch die Relaisvorrichtung durch Austauschen von Testdaten mit dem Testserver (CHECK_SERVER) umfasst:
ob Mehrwege-TCP-Optionen, die von der Relaisvorrichtung (R) oder vom Testserver (CHECK_SERVER) gesendet werden, durch eine Dienstfunktion, die sich als Unterbrechung des Flusses auf diesem Weg befindet, gefiltert oder geändert werden,
ob sie vom Testserver (CHECK_SERVER) oder von der Relaisvorrichtung (R) richtig empfangen werden,
- einen Schritt des Speicherns (E3) eines Status (PATH_CHECKED) des Weges hinsichtlich seiner Kompatibilität mit Mehrwege-TCP-Verbindungen, wobei der Status abhängig von einem Ergebnis der Ermittlung durch die Relaisvorrichtung ermittelt wird, wobei der Status eine Kompatibilität des Weges mit Mehrwege-TCP-Verbindungen angibt, wenn bei der Ermittlung ermittelt wird, dass die Mehrwege-TCP-Optionen richtig empfangen werden, und andernfalls eine Inkompatibilität mit Mehrwege-TCP-Verbindungen; und
- wenn außer der Verbindung mit der Client-Vorrichtung (T) keiner der anderen Wege, die es ermöglichen, die Relaisvorrichtung (R) zu erreichen, mit den Mehrwege-TCP-Verbindungen kompatibel ist, einen Schritt, bei dem sie von der Client-Vorrichtung (T) eine Meldung über die Initialisierung einer Mehrwegeverbindung mit einer anderen Client-Vorrichtung erhält, sie der Client-Verbindung (T) antwortet und dabei in ihrer Antwort keine Mehrwege-TCP-Option einschließt.

6. Relaisvorrichtung, die Mittel zum Durchführen einer einfachen TCP (Transmission Control Protocol)-Verbindung und zum Durchführen einer Mehrwege-TCP-Verbindung besitzt, wobei die Relaisvorrichtung mit einer Client-Vorrichtung verbunden ist, die geeignet oder nicht geeignet ist, eine Mehrwege-TCP-Verbindung durchzuführen, wobei die Relaisvorrichtung außerdem Mittel zu Folgendem umfasst:
- Erkennen mindestens eines Testservers (CHECK_SERVER), der geeignet ist, eine Mehrwege-TCP-Verbindung durchzuführen,
- Senden einer Anfrage zur Herstellung einer Mehrwege-TCP-Verbindung an den Testserver (CHECK_SERVER) ,
- Versuchen einer Herstellung mindestens einer Mehrwege-TCP-Verbindung mit dem Testserver (CHECK_SERVER) über mindestens einen Kommunikationsweg zwischen ihnen und
- Speichern eines Status (PATH_CHECKED) des Weges hinsichtlich seiner Kompatibilität mit Mehrwege-TCP-Verbindungen,
wobei die Mittel zum Versuchen einer Herstellung einer Mehrwege-TCP-Verbindung mit dem Testserver (CHECK_SERVER) Mittel zum Ermitteln durch Austauschen von Testdaten mit dem Testserver (CHECK_SERVER) während des Versuchs einer Herstellung der Mehrwege-TCP-Verbindung umfassen:
ob Mehrwege-TCP-Optionen, die von der Relaisvorrichtung (T, T1, T2, T3, R) oder vom Testserver (CHECK_SERVER) gesendet werden, durch eine Dienstfunktion, die sich als Unterbrechung des Flusses auf diesem Weg befindet, gefiltert oder geändert werden,
ob sie vom Testserver (CHECK_SERVER) oder von der Relaisvorrichtung (T, T1, T2, T3, R) richtig empfangen werden,
wobei die Mittel zum Speichern des Status des Weges dazu konfiguriert sind, einen Status zu speichern, der eine Kompatibilität des Weges mit Mehrwege-TCP-Verbindungen, angibt, wenn die Mittel zum Ermitteln ermitteln, dass die Mehrwege-TCP-Optionen richtig empfangen werden, und andernfalls einen Status, der eine Inkompatibilität mit Mehrwege-TCP-Verbindungen angibt;
wobei die Relaisvorrichtung, wenn außer ihrer Verbindung mit der Client-Vorrichtung (T) keiner der anderen Wege, die es ermöglichen, die Relaisvorrichtung zu erreichen, mit Mehrwege-TCP-Verbindungen kompatibel ist und wenn sie von der Client-Vorrichtung (T) eine Meldung über die Initialisierung einer Mehrwegeverbindung mit einer anderen Client-Vorrichtung empfängt, außerdem Mittel zum Antworten an die Client-Vorrichtung (T) umfasst, indem sie in ihre Antwort keine Mehrwege-TCP-Option einschließt.

7. System, umfassend:
- einen Testserver (CHECK_SERVER), der Mittel zum Durchführen einer Mehrwege-TCP (Transmission Control Protocol)-Verbindung besitzt; und
- eine kommunizierende Vorrichtung (T, T1, T2, T3, R), die eine Client-Vorrichtung nach Anspruch 3 oder eine mit der Client-Vorrichtung verbundene Relaisvorrichtung nach Anspruch 6 umfasst, die geeignet ist, den Testserver zu erkennen und mindestens eine Mehrwege-TCP-Verbindung mit dem Testserver über mindestens einen Kommunikationsweg zwischen ihnen herzustellen.

8. Nicht entfernbares oder teilweise oder vollständig entfernbares Speichermittel, umfassend Computerprogrammcodeanweisungen zur Ausführung der Schritte eines Kommunikationsverfahrens nach einem der Ansprüche 1, 2 oder 5, wenn die Anweisungen auf einem Computer ausgeführt werden.

9. Computerprogramm, das von einem Kommunikationsnetz herunterladbar ist und/oder auf einem durch Computer lesbaren Medium gespeichert ist und/oder durch einen Mikroprozessor ausführbar ist, umfassend Anweisungen zur Ausführung der Schritte eines Kommunikationsverfahrens nach einem der Ansprüche 1, 2 oder 5, wenn es auf einem Computer ausgeführt wird.

## Claims

1. Method for communication in an IP network, comprising the following steps implemented by a client device (T, T1, T2, T3) which is able to implement a single TCP, Transmission Control Protocol, connection and a multipath TCP connection:
- a step (E1) of discovering at least one test server (CHECK_SERVER) which is able to implement a multipath TCP connection,
- a step (E2) of attempting to establish at least one multipath TCP connection with the test server (CHECK_SERVER) along at least one path which makes it possible to reach said client device (T, T1, T2, T3), said step comprising a determination by exchanging test data with the test server (CHECK_SERVER) :
if multipath TCP options sent by the client device (T, T1, T2, T3) or by the test server (CHECK_SERVER) are filtered or modified by a service function placed in cut-through configuration of flows on said path, or
if they are received correctly by the test server (CHECK_SERVER) or by the client device (T, T1, T2, T3) ,
- a step (E3) of recording a status (PATH_CHECKED) of said path with regard to its compatibility with multipath TCP connections, said status being determined depending on a result of said determination by the client device, said status indicating a compatibility of said path with multipath TCP connections if it is determined during said determination that the multipath TCP options are received correctly, and an incompatibility with multipath TCP connections otherwise;
the method being **characterized in that** it further comprises:
- if none of the paths which make it possible to reach said client device (T, T1, T2, T3) is compatible with multipath TCP connections, a step during which said client device (T, T1, T2, T3) uses the single TCP transport mode to establish a connection with another client device, or connect to another client device, following the reception of a message establishing a multipath connection and sent by this other client device.

2. Communication method according to Claim 1, further comprising, if the client device (T, T1, T2, T3) finds that at least one of the paths which make it possible to reach this client device (T, T1, T2, T3) is compatible with multipath TCP connections, a step during which said client device (T, T1, T2, T3) uses multipath TCP options to establish connections with another client device along said at least one path which is compatible with multipath TCP connections.

3. Client device possessing means for implementing a single TCP, Transmission Control Protocol, connection and for implementing a multipath TCP connection, further comprising means for:
- discovering at least one test server (CHECK_SERVER) which is able to implement a multipath TCP connection,
- sending the test server (CHECK_SERVER) a request to establish a multipath TCP connection,
- attempting to establish at least one multipath TCP connection with said test server (CHECK_SERVER) along at least one communication path between them, and
- recording a status (PATH_CHECKED) of said path with regard to its compatibility with multipath TCP connections,
said means for attempting to establish a multipath TCP connection with said test server (CHECK_SERVER) comprising means for determining by exchanging test data with the test server (CHECK_SERVER) during the attempt to establish the multipath TCP connection:
if multipath TCP options sent by said client device (T, T1, T2, T3, R) or by said test server (CHECK_SERVER) are filtered or modified by a service function placed in cut-through configuration of flows on said path, or
if they are received correctly by the test server (CHECK_SERVER) or by the client device (T, T1, T2, T3, R),
said means for recording the status of said path being configured to record a status indicating a compatibility of said path with multipath TCP connections if the determining means determine that the multipath TCP options are received correctly, and a status indicating an incompatibility with multipath TCP connections otherwise;
said client device being **characterized in that** it further comprises means for, if none of the paths which make it possible to reach said client device (T, T1, T2, T3) is compatible with multipath TCP connections, using the single TCP transport mode to establish a connection with another client device, or connect to another client device, following the reception of a message establishing a multipath connection and sent by this other client device.

4. Client device according to Claim 3, further comprising means for:
- finding that at least one of the paths which make it possible to reach said client device (T, T1, T2, T3) is compatible with multipath TCP connections, and
- using multipath TCP options to establish connections with another client device along said path which is compatible with multipath TCP connections.

5. Method for communication in an IP network, comprising the following steps implemented by a relay device (R) which is able to implement a single TCP, Transmission Control Protocol, connection and a multipath TCP connection, said relay device (R) being connected to a client device (T) which is or is not able to implement a multipath TCP connection:
- a step (E1) of discovering at least one test server (CHECK_SERVER) which is able to implement a multipath TCP connection,
- a step (E2) of attempting to establish at least one multipath TCP connection with the test server (CHECK_SERVER) along at least one path which makes it possible to reach the relay device (R), said step comprising a determination by the relay device, by exchanging test data with the test server (CHECK_SERVER):
if multipath TCP options sent by the relay device (R) or by the test server (CHECK_SERVER) are filtered or modified by a service function placed in cut-through configuration of flows on said path, or
if they are received correctly by the test server (CHECK_SERVER) or by the relay device (R),
- a step (E3) of recording a status (PATH_CHECKED) of said path with regard to its compatibility with multipath TCP connections, said status being determined depending on a result of said determination by the relay device, said status indicating a compatibility of said path with multipath TCP connections if it is determined during said determination that the multipath TCP options are received correctly, and an incompatibility with multipath TCP connections otherwise; and
- if none of the paths which make it possible to reach said relay device (R), other than its connection to said client device (T), is compatible with multipath TCP connections, a step during which, if it receives, from the client device (T), a message initializing a multipath connection with another client device, it replies to the client device (T), not including any multipath TCP option in its reply.

6. Relay device possessing means for implementing a single TCP, Transmission Control Protocol, connection and for implementing a multipath TCP connection, said relay device being connected to a client device which is or is not able to implement a multipath TCP connection, said relay device further comprising means for:
- discovering at least one test server (CHECK_SERVER) which is able to implement a multipath TCP connection,
- sending the test server (CHECK_SERVER) a request to establish a multipath TCP connection,
- attempting to establish at least one multipath TCP connection with said test server (CHECK_SERVER) along at least one communication path between them, and
- recording a status (PATH_CHECKED) of said path with regard to its compatibility with multipath TCP connections,
said means for attempting to establish a multipath TCP connection with said test server (CHECK_SERVER) comprising means for determining by exchanging test data with the test server (CHECK_SERVER) during the attempt to establish the multipath TCP connection:
- if multipath TCP options sent by said relay device (T, T1, T2, T3, R) or by said test server (CHECK_SERVER) are filtered or modified by a service function placed in cut-through configuration of flows on said path, or
- if they are received correctly by the test server (CHECK_SERVER) or by the relay device (T, T1, T2, T3, R),
and said means for recording the status of said path being configured to record a status indicating a compatibility of said path with multipath TCP connections if the determining means determine that the multipath TCP options are received correctly, and a status indicating an incompatibility with multipath TCP connections otherwise;
said relay device further comprising means for, if none of the paths which make it possible to reach said relay device, other than its connection to said client device (T), is compatible with multipath TCP connections and if it receives, from said client device (T), a message initializing a multipath connection with another client device, replying to said client device (T), not including any multipath TCP option in its reply.

7. System comprising:
- a test server (CHECK_SERVER), possessing means for implementing a multipath TCP, Transmission Control Protocol, connection; and
- a communicating device (T, T1, T2, T3, R) comprising a client device according to Claim 3 or a relay device according to Claim 6 connected to a client device, which is able to discover said test server and to establish at least one multipath TCP connection with said test server along at least one communication path between them.

8. Non-removable, or partially or totally removable, data storage means comprising computer program code instructions for executing the steps of a communication method according to any one of Claims 1, 2 and 5, when the instructions are executed on a computer.

9. Computer program which can be downloaded from a communications network and/or recorded on a computer-readable medium and/or which can be executed by a microprocessor, comprising instructions for executing the steps of a communication method according to any one of Claims 1, 2 and 5, when it is executed on a computer.
